# EUROPÄISCHE PATENTSCHRIFT

(11) **EP 4 097 927 B1**
(45) Veröffentlichungstag und Bekanntmachung des Hinweises auf die Patenterteilung: **27.08.2025**
(21) Anmeldenummer: 21701344.0
(22) Anmeldetag: 28.01.2021
(51) Int. Cl.: H04L 12/46

(54) **SPE-BASIERTER GERÄTEADAPTER ZUM ANSCHLIESSEN EINES NICHT ETHERNET-FÄHIGEN FELDGERÄTES AN EIN ETHERNET-BASIERTES PROZESSSTEUERUNGSSYSTEM**
SPE-BASED DEVICE ADAPTER FOR CONNECTING A NON-ETHERNET-COMPATIBLE FIELD DEVICE TO AN ETHERNET-BASED PROCESS CONTROL SYSTEM
ADAPTATEUR D'APPAREIL BASÉ SUR SPE POUR CONNECTER UN APPAREIL DE TERRAIN COMPATIBLE NON ETHERNET À UN SYSTÈME DE COMMANDE DE PROCESSUS BASÉ SUR ETHERNET

(30) Priorität: 30.01.2020 LU 101627
(43) Veröffentlichungstag der Anmeldung: 07.12.2022
(73) Patentinhaber: PHOENIX CONTACT GMBH & CO. KG, 32825 Blomberg (DE)
(72) Erfinder: MÜLLER, Martin, 32676 Lüdge (DE)
(74) Vertreter: Blumbach · Zinngrebe Patentanwälte PartG mbB
(86) Internationale Anmeldenummer: PCT/EP2021/051979
(87) Internationale Veröffentlichungsnummer: WO 2021/152010

(56) Entgegenhaltungen:
- DE-A1- 102006 036 770
- DE-A1- 102008 019 053
- DE-A1- 102015 200 333
- US-A1- 2006 047 480

## Beschreibung

Die Erfindung betrifft einen SPE-basierten Geräteadapter zum Anschließen eines nicht Ethernet-fähigen Feldgerätes an ein Ethernet-basiertes Prozesssteuerungssystem, welches insbesondere Bestandteil einer industriellen Automatisierungsanlage sein kann.

Bei einem Prozesssteuerungssystem kommunizieren Feldgeräte wie zum Beispiel Sensoren und Aktoren über ein Kommunikationsnetzwerk mit einer übergeordneten Steuerungseinrichtung. Mittlerweile setzt sich auch in der industriellen Automatisierungstechnik die Ethernet-Technologie immer mehr durch. Bisher werden Vierdraht- oder Achtdraht-Ethernet-Leitungen in Kommunikationsnetzwerken eingesetzt, um Feldgeräte mit einer übergeordneten Ethernet-fähigen Steuerungseinrichtung zu verbinden. Sollen nicht Ethernet-fähige Feldgeräte, wie zum Beispiel IO-Linkbasierte Feldgeräte an eine Vierdraht- oder Achtdraht-Ethernet-Leitung angeschlossen werden, kommen entsprechende IO-Module zum Einsatz, über die nicht-Ethernet-fähige Feldgeräte an die Vierdraht- oder Achtdraht-Ethernet-Leitung angeschlossen werden können. In jüngster Zeit zeichnet sich in der Automatisierungstechnik immer mehr ab, dass zumindest in der Netzwerkebene die Single-Pair-Ethernet (SPE)-Technologie zum Einsatz kommen wird, bei der Netzwerkteilnehmer über Zweidraht-Ethernet-Leitungen miteinander verkabelt werden. Die SPE-Technologie ermöglicht nicht nur einen Datenaustausch, sondern auch eine Energieversorgung der angeschlossenen Netzwerkteilnehmer, was als Power-Over-Dataline (PoDL) bekannt ist.

Aus der US 2006/0047480 A1 ist ein Temperaturmesssystem bekannt, welches einen Temperatursensor aufweist, der mit einem Feldprozessormodul kommunikativ verbunden ist. Das Feldprozessormodul kommuniziert wiederum mit einem Hilfsprozessormodul über einen Bitbus. Das Hilfsprozessormodul ist ferner zur Kommunikation mit einem Feldbus verbunden. Hierzu weist das Hilfsprozessormodul einen Protokollwandler auf, der Feldbus-Daten in Bitbus-Daten und umgekehrt umwandeln kann.

Der vorliegenden Erfindung liegt die Aufgabe zugrunde, einen SPE-basierten Geräteadapter zur Verfügung zu stellen, mit welchem ein nicht Ethernet-fähiges Feldgerät in einfacher und kostengünstiger Weise mittels einer zweiadrigen Ethernet-Leitung an ein Ethernet-basiertes Prozesssteuerungssystem angebunden werden kann.

Das oben genannte technische Problem wird durch die Merkmale des Anspruchs 1 gelöst.

Demgemäß ist ein SPE-basierter Geräteadapter zum Anschließen eines nicht Ethernet-fähigen Feldgerätes an ein Ethernet-basiertes Prozesssteuerungssystem vorgesehen, wobei der SPE-basierte Geräteadapter folgende Merkmale aufweist:
eine erste SPE-basierte Kommunikationsschnittstelle, die zum Anschließen einer als Single-Pair-Ethernet-Leitung ausgebildeten zweiadrigen Ethernet-Leitung sowie zum Empfangen und Senden von Ethernet-Datenrahmen über die zweiadrige Ethernet-Leitung ausgebildet ist,
eine zweite Kommunikationsschnittstelle, die zum Empfangen und Senden von Daten gemäß einem ersten Kommunikationsprotokoll von und zu einem nicht Ethernet-fähigen Feldgerät ausgebildet ist, wobei das erste Kommunikationsprotokoll kein Ethernet-basiertes Kommunikationsprotokoll ist,
eine erste Umwandlungseinrichtung, die dazu ausgebildet ist, über die zweite Kommunikationsschnittstelle empfangene Daten in Ethernet-Datenrahmen zur Übertragung über die erste SPE-basierte Kommunikationsschnittstelle umzuwandeln und über die erste SPE-basierte Kommunikationsschnittstelle empfangene Ethernet-Datenrahmen in Daten zur Übertragung über die zweite Kommunikationsschnittstelle gemäß dem ersten Kommunikationsprotokoll umzuwandeln, wobei die Energieversorgung des Single-Pair-Ethernet-basieren Geräteadapters unter Verwendung der Power Over Data Line-Technologie über eine an die erste Single-Pair-Ethernet-basierte Kommunikationsschnittstelle anschließbare zweiadrige Ethernet-Leitung erfolgt.

Angemerkt sei, dass der SPE-basierte Geräteadapter insbesondere als Steckverbinder ausgebildet sein kann. Das Merkmal "Ethernet-Datenrahmen" kann beispielsweise im Rahmen der Erfindung dahingehend verstanden werden, dass Daten gemäß einem Ethernet-Kommunikationsprotokoll in Ethernet-Datenrahmen über eine SPE-basierte Kommunikationsschnittstelle und eine zweiadrige Ethernet-Leitung übertragen werden können.

Um einen kompakten und flexiblen SPE-basierten Geräteadapter zu erhalten, kann eine dritte Kommunikationsschnittstelle vorgesehen sein, die zum Empfangen und Senden von Daten gemäß einem zweiten Kommunikationsprotokoll von und zu einem nicht Ethernet-fähigen Feldgerät ausgebildet ist. Das zweite Kommunikationsprotokoll ist wiederum kein Ethernet-Kommunikationsprotokoll. Ferner unterscheidet sich das zweite Kommunikationsprotokoll vom ersten Kommunikationsprotokolle. Zudem ist eine zweite Umwandlungseinrichtung vorgesehen, die dazu ausgebildet ist, über die dritte Kommunikationsschnittstelle empfangene Daten in Ethernet-Datenrahmen zur Übertragung über die erste SPE-basierte Kommunikationsschnittstelle umzuwandeln und über die erste SPE-basierte Kommunikationsschnittstelle empfangene Ethernet-Datenrahmen in Daten zur Übertragung über die dritte Kommunikationsschnittstelle gemäß dem zweiten Kommunikationsprotokoll umzuwandeln. Ferner kann eine Steuer-und/oder Auswerteeinrichtung vorgesehen sein, die dazu ausgebildet ist zu erkennen, ob ein nicht Ethernet-fähiges Feldgerät an der zweiten oder dritten Kommunikationsstelle angeschlossen ist. Sie ist ferner dazu ausgebildet, in Abhängigkeit hiervon die erste oder zweite Umwandlungseinrichtung mit der ersten SPE-basierten Kommunikationsschnittstelle zu verbinden.

Gemäß einer alternativen Ausgestaltung kann der SPE-basierte Geräteadapter eine dritte Kommunikationsschnittstelle aufweisen, die zum Empfangen und Senden von Daten gemäß einem zweiten Kommunikationsprotokoll von und zu einem nicht Ethernet-fähigen Feldgerät ausgebildet ist. Das zweite Kommunikationsprotokoll ist kein Ethernet Kommunikationsprotokolle und unterscheidet sich zudem vom ersten Kommunikationsprotokoll. Zudem ist eine vierte SPE-basierte Kommunikationsschnittstelle vorgesehen, die zum Empfangen und Senden von Ethernet-Datenrahmen über eine zweiadrige Ethernet-Leitung ausgebildet ist. Ferner ist eine zweite Umwandlungseinrichtung vorgesehen, die dazu ausgebildet ist, über die dritte Kommunikationsschnittstelle empfangene Daten Ethernet-Datenrahmen zur Übertragung über die vierte SPE-basierte Kommunikationsschnittstelle umzuwandeln und über die vierte SPE-basierte Kommunikationsschnittstelle empfangene Ethernet-Datenrahmen in Daten zur Übertragung über die dritte Kommunikationsschnittstelle gemäß dem zweiten Kommunikationsprotokoll umzuwandeln.

An dieser Stelle sei angemerkt, dass es sich bei der ersten und zweiten Umwandlungseinrichtung vorzugsweise um eine Kommunikationsprotokoll-Umwandlungseinrichtung handelt, die Daten gemäß einem Ethernet-Kommunikationsprotokoll, also Ethernet-Datenrahmen, in Daten gemäß dem ersten und/oder zweiten Kommunikationsprotokoll und umgekehrt umwandelt.

Vorzugsweise kann es sich bei der zweiten Kommunikationsschnittstelle um eine IO-Link-, HART-, CAN-, Profibus-, RS-232-oder eine RS-485-Schnittstelle und beim ersten Kommunikationsprotokoll um ein IO-Link-, HART-, CAN-, Profibus-, RS-232-oder ein RS-485-Kommunikationsprotokoll handeln. Beliebige weitere nicht Ethernet-basierte Kommunikationsschnittstellen und nicht Ethernet-basierte Kommunikationsprotokoll sind jedoch möglich. Ferner kann es sich bei der zweiten Kommunikationsschnittstelle sich um eine digitale, analoge oder optische Kommunikationsschnittstelle handeln.

In ähnlicher Weise kann es sich bei der dritten Kommunikationsschnittstelle um eine IO-Link-, HART-, CAN-, Profibus-, RS-232-oder eine RS-485-Schnittstelle und beim zweiten Kommunikationsprotokoll um ein IO-Link-, HART-, CAN-, Profibus-, RS-232-oder eine RS-485-Kommunkationsprotokoll handeln, wobei die zweite und dritte Kommunikationsschnittstelle des SPE-basierten Geräteadapters und das angewandte erste und zweite Kommunikationsprotokoll verschieden sind.

Um die elektronischen Komponenten des SPE-basierten Geräteadapters, insbesondere die Umwandlungseinrichtungen und die Auswerte- und/oder Steuereinrichtung mit Energie versorgen zu können, wird die sogenannte Power Over Data Line Technologie verwendet, bei der die Energieversorgung des SPE-basierten Geräteadapters über eine zweiadrige Ethernet-Leitung erfolgt, indem beispielsweise an die zweiadrige Ethernet-Leitung ein Netzkopplungselement oder eine Steuerungseinrichtung angeschlossen werden kann, die die entsprechende Energie zur Verfügung stellt.

Das oben genannte technische Problem wird ebenfalls durch die Merkmale des Anspruchs 7 gelöst.

Demnach wird ein Ethernet-basiertes Prozesssteuerungssystem mit folgenden Merkmalen geschaffen:
einem SPE-basierten Geräteadapter nach einem der Ansprüche 1 bis 6, an welchem ein nicht Ethernet-fähiges Feldgeräts angeschlossen ist,
einem Netzkopplungselement, der aufweist:
   - einen Port, der zum Anschließen einer vier- oder achtadrigen Ethernet-Leitung ausgebildet ist,
   - wenigstens einen SPE-basierten Port, der zum Anschließen einer zweiadrigen Ethernet-Leitung ausgebildet ist, und
   - eine Umwandlungseinrichtung, die dazu ausgebildet ist, Daten, die an dem wenigstens einen SPE-basierten Port angekommen, in Daten zur Übertragung über den Port umzuwandeln, und Daten, die an dem Port ankommen, in Daten zur Übertragung über den wenigstens einen SPE-basierten Port umzuwandeln, und
eine übergeordnete Steuerungseinrichtung, die über eine vier- oder achtadrigen Ethernet-Leitung an das Netzkopplungselement anschließbar ist,
wobei das Netzkopplungselement über eine zweiadrige Ethernet-Leitung mit dem SPE-basierten Geräteadapter verbindbar ist.

Die Erfindung wird nachfolgend anhand eines Ausführungsbeispiels in Verbindung mit den beiliegenden Zeichnungen näher erläutert. Darin zeigen:
- Fig. 1: ein beispielhaftes Prozesssteuerungssystem mit einem erfindungsgemäßen SPE-basierten Geräteadapter und
- Fig. 2: einen alternativen SPE-basierten Geräteadapter

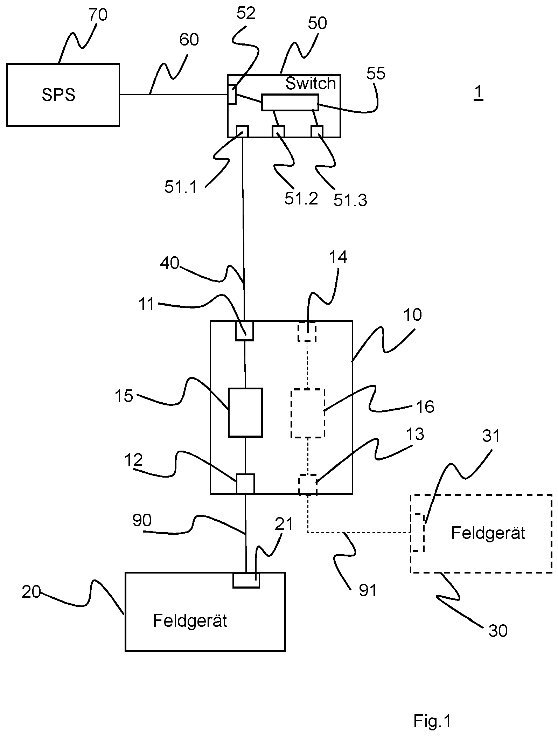

In Fig. 1 ist ein Single-Pair-Ethernet basierter Geräteadapter 10, kurz SPE-Geräteadapter genannt, dargestellt, mit dem wenigstens ein nicht Ethernet-fähiges Feldgerät 20 an ein Ethernet-basiertes Prozesssteuerungssystem 1 angebunden werden kann. Der beispielhafte SPE-basierte Geräteadapter 10 ist vorzugsweise als Steckverbinder ausgebildet, der eine erste SPE-basierte Kommunikationsschnittstelle 11 aufweist, die zum Anschließen einer als Single-Pair-Ethernet-Leitung ausgebildeten zweiadrigen Ethernet-Leitung 40 sowie zum Empfangen und Senden von Ethernet-Datenrahmen über die zweiadrige Ethernet-Leitung 40 ausgebildet ist. Anzumerken ist, dass ein Ethernet-Datenrahmen auf einem Ethernet-Kommunikationsprotokoll basiert. Vorzugsweise kann der SPE-basierte Geräteadapter 10 über die zweiadrige Ethernet-Leitung 40, d. h. eine SPE-Leitung, mit einem Netzkopplungselement 50 verbunden werden. Bei dem Netzkopplungselement 50 handelt es sich vorzugsweise um einen Layer-2-Ethernet-Switch, der mehrere SPE-basierte Ports 51.1-51.n aufweisen kann. Bei dem dargestellten Beispiel ist die zweiadrige Ethernet-Leitung 40 mit dem SPE-basierten Port 51.1 verbunden. Das Netzkopplungselement 50 weist ferner eine Ethernet-basierte Schnittstelle 52 auf, an die entweder eine vieradrige oder achtadrige Ethernet-Leitung 60 angeschlossen werden kann. Bei dem vorliegenden Beispiel sei angenommen, dass es sich bei der Leitung 60 um eine achtadrige Ethernet-Leitung handelt. Über die achtadrige Leitung 60 kann das Netzkopplungselement 50 mit einer übergeordneten Steuerungseinrichtung 70 verbunden sein, die beispielsweise eine Ethernet-fähige speicherprogrammierbare Steuerung (SPS) ist. Sofern die übergeordnete Steuerungseinrichtung 70 über eine SPE-basierte Schnittstelle verfügt, kann der SPE-basierte Geräteadapter 10 über die zweiadrige Ethernet-Leitung 40 auch direkt an die übergeordnete Steuerungseinrichtung 70 angeschlossen werden. Das beispielhafte Netzkopplungselement 50 weist vorzugsweise eine Umwandlungseinrichtung 55 auf, die dazu ausgebildet ist, Daten, die zum Beispiel am SPE-basierten Port 51.1 ankommen, in Daten zur Übertragung über den achtadrigen Ethernet-Port 52 und umgekehrt umzuwandeln.

Vorteilhafterweise können dem Ethernet-basierten Prozesssteuerungssystem 1 die übergeordnete Steuerungseinrichtung 70, der SPE-basierte Geräteadapter 10 oder 80, das Netzkopplungselement 50 und nicht Ethernet-fähige Feldgeräte 20, 30 zugerechnet werden.

Der SPE-basierte Geräte Adapter 10 weist eine zweite Kommunikationsschnittstelle 12 auf, die zum Empfangen und Senden von Daten gemäß einem ersten Kommunikationsprotokoll von und zu dem nicht Ethernet-fähigen Feldgerät 20 ausgebildet ist. Das nicht Ethernet-fähige Feldgerät 20 kann zum Beispiel ein Sensor und Aktor mit einer Kommunikationsschnittstelle 21 sein. Die zweite Kommunikationsschnittstelle 12 sowie die Kommunikationsschnittstelle 21 des nicht Ethernet-fähigen Feldgerätes 20 unterstützen jeweils ein erstes Kommunikationsprotokoll, dass kein Ethernet-basiertes Kommunikationsprotokoll ist. Beispielsweise kann es sich bei der zweiten Kommunikationsschnittstelle 12 und der Kommunikationsschnittstelle 21 des Feldgerät 20 um eine IO-Link-, HART-, CAN-, Profibus-, RS-232-oder eine RS-485-Schnittstelle handeln. Im vorliegenden Fall handelt es sich bei der zweiten Kommunikationsschnittstelle 12 und der Schnittstelle 21 des Feldgeräts 20 beispielsweise um eine IO-Link-Schnittstelle, die im dargestellten Beispiel über eine entsprechende Leitung 90 miteinander verbunden sind. Bei dem nicht Ethernet-fähigen Feldgerät 20 handelt es sich somit um ein Feldgerät, welches das IO-Link-Kommunikationsprotokoll anwendet. Um das nicht Ethernet-fähige Feldgerät 20 an das Ethernet-basierte Prozesssteuerungssystem 1 anbinden zu können, weist der SPE-basierte Geräteadapter eine Umwandlungseinrichtung 15 auf, die vorzugsweise als Kommunikationsprotokollwandler ausgebildet ist. Demzufolge ist die Umwandlungseinrichtung 15 dazu ausgebildet, über die zweite, beispielhaft als IO-Link-Schnittstelle ausgebildete Kommunikationsschnittstelle 12 vom Feldgerät 20 empfangene Daten in Ethernet-Datenrahmen zur Übertragung über die erste SPE-basierte Kommunikationsschnittstelle 11 umzuwandeln und über die erste SPE-basierte Kommunikationsschnittstelle 11 vom Netzkopplungselement 50 bzw. von der übergeordneten Steuerungseinrichtung 70 empfangene Ethernet-Datenrahmen in Daten zur Übertragung über die zweite Kommunikationsschnittstelle 12 gemäß dem ersten Kommunikationsprotokoll, hier das IO-Link-Kommunikationsprotokoll, umzuwandeln.

Um den Einsatzbereich und die Flexibilität des SPE-basierten Geräteadapters 10 zu erweitern und eine Skalierbarkeit zu erreichen, kann eine dritte Kommunikationsschnittstelle 13 vorgesehen sein, die zum Empfangen und Senden von Daten gemäß einem zweiten Kommunikationsprotokoll von und zu einem nicht Ethernet-fähigen Feldgerät 30 ausgebildet ist, wobei das zweite Kommunikationsprotokoll kein Ethernet-Kommunikationsprotokoll ist und das erste und zweite Kommunikationsprotokolle verschieden voneinander sind. So kann beispielsweise die dritte Kommunikationsschnittstelle als zweites Kommunikationsprotokoll beispielsweise das Profibus-Kommunikationsprotokolle unterstützen, wobei dann das nicht Ethernet-fähige Feldgerät 30 als ein Profibusfähiges Feldgerät 30 mit einer Profibus-basierten Kommunikationsschnittstelle 31 ausgebildet ist. Über die Profibus-basierte Kommunikationsschnittstelle 31 kann das Feldgerät 30 mittels einer Profibus-basierten Anschlussleitung 91 an die dritte Kommunikationsschnittstelle 13 angeschlossen werden. Ferner kann der SPE-basierte Geräteadapter 10 eine vierte SPE-basierte Kommunikationsschnittstelle 14 aufweisen. Zudem kann eine zweite Umwandlungseinrichtung im SPE-basierten Geräteadapter 10 implementiert sein, die dazu ausgebildet ist, über die dritte Kommunikationsschnittstelle vom Feldgerät 30 empfangene Daten in Ethernet-Datenrahmen zur Übertragung über die vierte SPE-basierte Kommunikationsschnittstelle 14 umzuwandeln und über die vierte SPE-basierte Kommunikationsschnittstelle 14 empfangene Ethernet-Datenrahmen in Daten zur Übertragung über die dritte Kommunikationsschnittstelle 13 gemäß dem zweiten Kommunikationsprotokoll, im vorliegenden Beispiel ist das das Profibus-Kommunikationsprotokolle umzuwandeln.

Verfügt der Geräteadapter 10 beispielsweise über die vierte SPE-basierte Kommunikationsschnittstelle, die zweite Umwandlungseinrichtung 16 und die dritte Kommunikationsschnittstelle 13, wird in der Praxis vorzugsweise nur ein Feldgerät, zum Beispiel das Feldgerät 20 oder das Feldgerät 30 mittels des SPE-basierten Geräteadapters 10 an das Ethernet-basierte Prozesssteuerungssystem 1 bzw. das Netzkopplungselement 50 beispielsweise über die zweiadrige Ethernet-Leitung 40 angeschlossen. Denkbar ist aber auch, dass beide Feldgerät 20 und 30 gleichzeitig über den SPE-basierten Geräteadapter 10 beispielsweise an das Netzkopplungselement 50 angeschlossen werden. Hierzu kann eine weitere zweiadrige Ethernet-Leitung (nicht dargestellt) verwendet werden, um die vierte SPE-basierte Kommunikationsschnittstelle 14 beispielsweise mit dem SPE-basierten Port 51.2 des Netzkopplungselementes 50 zu verbinden.

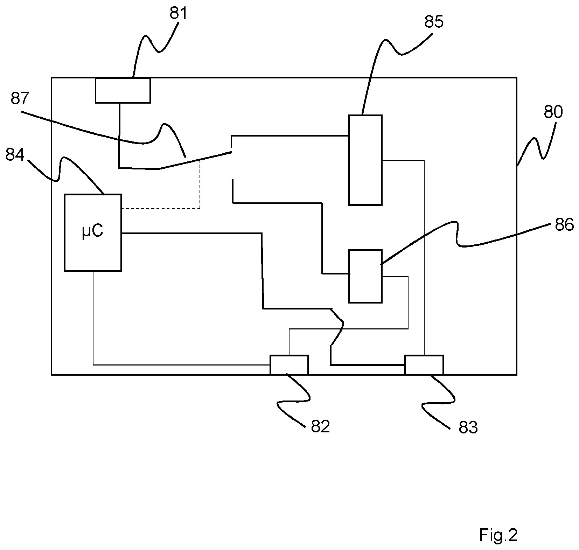

In Figur 2 ist ein alternativer SPE-basierter Geräteadapter 80 dargestellt, der ähnlich dem SPE-Geräteadapter 10 folgende Merkmale aufweisen kann: eine erste SPE-basierte Kommunikationsschnittstelle 81, die zum Empfangen und Senden von Ethernet-Datenrahmen über eine zweiadrige Ethernet-Leitung, beispielsweise die Leitung 40, ausgebildet ist,
eine 81 Kommunikationsschnittstelle 82, die zum Empfangen und Senden von Daten gemäß einem ersten Kommunikationsprotokoll von und zu einem nicht Ethernet-fähigen Feldgerät, beispielsweise das Feldgerät 20, ausgebildet ist, wobei das erste Kommunikationsprotokoll kein Ethernet-basiertes Kommunikationsprotokoll ist,
eine erste Umwandlungseinrichtung 86, die dazu ausgebildet ist, über die zweite Kommunikationsschnittstelle 82 empfangene Daten in Ethernet-Datenrahmen zur Übertragung über die erste SPE-basierte Kommunikationsschnittstelle 81 umzuwandeln und über die erste SPE-basierte Kommunikationsschnittstelle 81 empfangene Ethernet-Datenrahmen in Daten zur Übertragung über die zweite Kommunikationsschnittstelle 82 gemäß dem ersten Kommunikationsprotokoll umzuwandeln Im vorliegenden Beispiel kann es sich bei dem ersten Kommunikationsprotokoll wiederum um das IO-Link-Kommunikationsprotokoll handeln. Bei dem beispielhafte SPE-basierte Geräteadapter 80 ist somit die zweite Kommunikationsschnittstelle 82 dazu ausgebildet, Daten gemäß dem IO-Link-Kommunikationsprotokoll zu empfangen und zu senden.

Gemäß einer vorteilhaften Ausgestaltung können mit dem SPE-basierten Geräteadapter 80 aber auch wenigstens zwei verschiedene nicht Ethernet-fähige Feldgeräte an das Ethernet-basierte Prozesssteuerungssystem 1 angeschlossen werden.

Hierzu weist der SPE-basierte Geräteadapter 80 weiterhin eine dritte Kommunikationsschnittstelle 83 auf, die zum Empfangen und Senden von Daten gemäß einem zweiten Kommunikationsprotokoll von und zu einem nicht Ethernet-fähigen Feldgerät, beispielsweise das Feldgerät 30, ausgebildet ist. Bei dem zweiten Kommunikationsprotokoll kann es sich beispielsweise um das Profibus-Kommunikationsprotokoll handeln, wobei beispielsweise das Feldgerät 30 an die dritte Kommunikationsschnittstelle 83 über die Anschlussleitung 91 angeschlossen werden kann. Das zweite Kommunikationsprotokoll ist kein Ethernet-Kommunikationsprotokoll und unterscheidet sich vom ersten Kommunikationsprotokoll. Der SPE-basierte Geräteadapter 80 kann eine zweite Umwandlungseinrichtung 85 aufweisen, die dazu ausgebildet ist, über die dritte Kommunikation Schnittstelle 83 empfangene Daten in Ethernet-Datenrahmen zu Übertragung über die erste SPE-basierte Kommunikationsschnittstelle 81 umzuwandeln und über die erste SPE-basierte Kommunikationsschnittstelle empfangene Ethernet-Datenrahmen in Daten zur Übertragung über die dritte Kommunikationsschnittstelle 83 gemäß dem zweiten Kommunikationsprotokolle umzuwandeln. Der SPE-basierte Geräteadapter 80 fungiert somit als eine Art Gateway, d.h. als Protokollwandler. Weiterhin kann der SPE-basierte Geräte Adapter 80 eine Steuer-und/oder Auswerteeinrichtung 84 aufweisen, die beispielsweise als Mikrocontroller ausgebildet ist. Die Steuer-und/oder Auswerteeinrichtung 84 ist dazu ausgebildet, zu erkennen, ob ein nicht Ethernet-fähiges Feldgerät an der zweiten Kommunikationsschnittstelle 82 oder der dritten Kommunikationsschnittstelle angeschlossen ist. Die Steuer- und/oder Auswerteeinrichtung 84 ist ferner dazu ausgebildet, in Abhängigkeit davon, ob an der zweiten oder dritten Kommunikation Schnittstelle ein nicht Ethernet-fähiges Feldgerät angeschlossen ist, die erste Umwandlungseinrichtung 86 oder die zweite Umwandlungseinrichtung 85 mit der ersten SPE-basierten Kommunikationsschnittstelle 81 zu verbinden. Hierzu kann die Steuer-und/oder Auswerteeinrichtung 84 ein Schaltelement 87 entsprechend ansteuern.

Um insbesondere die Umwandlungseinrichtung 15 und, sofern vorhanden, die Umwandlungseinrichtung 16 mit Energie versorgen zu können, wird die sogenannte Power Over Data Line-Technologie genutzt. Die PoDL-Technologie ermöglicht, dass, wenn beispielsweise das Netzkopplungselement 50 über eine eigene Energieversorgungseinrichtung verfügt, der SPE-basierte Geräteadapter 10 über die zweiadrige Ethernet-Leitung 40 mit Energie versorgt werden kann. In ähnlicher Weise kann auch der SPE-basierte Geräteadapter 80 und insbesondere die Steuer-und/oder Auswerteeinrichtung 84 sowie die beiden Umwandlungseinrichtungen 85 und 86 beispielsweise über die Energieversorgungseinrichtung des Netzkopplungselementes 50 mit Energie versorgt werden.

Nachfolgend werden einige beispielhafte Aspekte der Erfindung noch einmal zusammengefasst.

Demgemäß ist ein Prozessteuerungssystem 1 vorgesehen, welches beispielhaft in Fig. 1 dargestellt ist und folgende Merkmale aufweisen kann:
einen SPE-basierten Geräteadapter 10 bzw. 80, wie oben beispielhaft erläutert, an welchem ein nicht Ethernet-fähiges Feldgeräts 20 und/oder 30 angeschlossen ist,
ein Netzkopplungselement 50, das aufweist:
   - einen Port 52, der zum Anschließen einer vier- oder achtadrigen Ethernet-Leitung 60 ausgebildet ist,
   - wenigstens einen SPE-basierten Port 51.1-51.n, der zum Anschließen einer zweiadrigen Ethernet-Leitung 40 ausgebildet ist, und
   - eine Umwandlungseinrichtung, die dazu ausgebildet ist, Daten, die an dem wenigstens einen SPE-basierten Port 51.1-51.n angekommen, in Daten zur Übertragung über den Port 52 umzuwandeln, und Daten, die an dem Port 52 ankommen, in Daten zur Übertragung über den wenigstens einen SPE-basierten Port 51.1-51.n umzuwandeln, und
eine übergeordnete Steuerungseinrichtung 70, die über eine vier- oder achtadrigen Ethernet-Leitung 60 an das Netzkopplungselement (50) anschließbar ist,
wobei das Netzkopplungselement 50 über eine zweiadrige Ethernet-Leitung 40 mit dem SPE-basierten Geräteadapter 10, 80 verbindbar ist.

### Bezugszeichenliste

- 1: Prozesssteuerungssystem
- 10: SPE-basierte Geräteadapter
- 11: erste SPE-basierte Kommunikationsschnittstelle
- 12: zweite Kommunikationsschnittstelle
- 13: dritte Kommunikationsschnittstelle
- 14: vierte SPE-basierte Kommunikationsschnittstelle
- 15: erste Umwandlungseinrichtung, insbesondere zur Kommunikationsprotokoll-Umwandlung,
- 16: zweite Umwandlungseinrichtung, insbesondere zur Kommunikationsprotokoll-Umwandlung
- 20: nicht Ethernet-fähiges Feldgerät, insbesondere Sensor oder Aktor
- 21: Kommunikationsschnittstelle
- 30: nicht Ethernet-fähiges Feldgerät, insbesondere Sensor oder Aktor
- 31: Kommunikationsschnittstelle
- 40: zweiadrige Ethernet-Leitung
- 50: Netzkopplungselement, insbesondere ein Layer-2-Ethernet-Switch
- 51.1-n: SPE-basierter Port
- 52: Port zum Anschließen einer vier- oder achtadrigen Ethernet-Leitung
- 55: Umwandlungseinrichtung
- 60: vier- oder achtadrige Ethernet-Leitung
- 70: überlagerte Steuerungseinrichtung, z. B. eine Ethernet-fähige SPS
- 80: SPE-basierte Geräteadapter
- 81: erste SPE-basierte Kommunikationsschnittstelle
- 82: zweite Kommunikationsschnittstelle
- 83: dritte Kommunikationsschnittstelle
- 84: Auswerte- und Steuereinrichtung, z.B. ein Mikrocontroller vierte SPE-basierte Kommunikationsschnittstelle
- 85: erste Umwandlungseinrichtung, insbesondere zur Kommunikationsprotokoll-Umwandlung,
- 86: zweite Umwandlungseinrichtung, insbesondere zur Kommunikationsprotokoll-Umwandlung
- 87: ansteuerbares Schaltelement
- 90: Anschlussleitung
- 91: Anschlussleitung

## Patentansprüche

1. Single-Pair-Ethernet-basierter Geräteadapter (10; 80) zum Anschließen eines nicht Ethernet-fähigen Feldgeräts (20, 30) an ein Ethernet-basiertes Prozesssteuerungssystem (1), aufweisend:
eine erste Single-Pair-Ethernet-basierte Kommunikationsschnittstelle (11; 81), die zum Anschließen einer als Single-Pair-Ethernet-Leitung ausgebildeten zweiadrigen Ethernet-Leitung (40) sowie zum Empfangen und Senden von Ethernet-Datenrahmen über die zweiadrige Ethernet-Leitung (40) ausgebildet ist,
eine zweite Kommunikationsschnittstelle (12; 82), die zum Empfangen und Senden von Daten gemäß einem ersten Kommunikationsprotokoll von und zu einem nicht Ethernet-fähigen Feldgerät (20) ausgebildet ist, wobei das erste Kommunikationsprotokoll kein Ethernet-basiertes Kommunikationsprotokoll ist,
eine erste Umwandlungseinrichtung (15; 86), die dazu ausgebildet ist, über die zweite
Kommunikationsschnittstelle (12; 82) empfangene Daten in Ethernet-Datenrahmen zur Übertragung über die erste Single-Pair-Ethernet-basierte
Kommunikationsschnittstelle (11; 81) umzuwandeln und über die erste Single-Pair-Ethernet-basierte Kommunikationsschnittstelle (11, 81) empfangene Ethernet-Datenrahmen in Daten zur Übertragung über die zweite Kommunikationsschnittstelle (12; 82) gemäß dem ersten Kommunikationsprotokoll umzuwandeln,
wobei die Energieversorgung des Single-Pair-Ethernet-basieren Geräteadapters (10; 80) unter Verwendung der Power Over Data Line-Technologie über eine an die erste Single-Pair-Ethernet-basierte
Kommunikationsschnittstelle (11; 81) anschließbare zweiadrige Ethernet-Leitung erfolgt.

2. Single-Pair-Ethernet-basierter Geräteadapter (80) nach Anspruch 1,
**gekennzeichnet durch**
eine dritte Kommunikationsschnittstelle (83), die zum Empfangen und Senden von Daten gemäß einem zweiten Kommunikationsprotokoll von und zu einem nicht Ethernet-fähigen Feldgerät (20, 30) ausgebildet ist, wobei das zweite Kommunikationsprotokoll kein Ethernet-Kommunikationsprotokoll ist und das erste und zweite Kommunikationsprotokoll verschieden sind,
eine zweite Umwandlungseinrichtung (85), die dazu ausgebildet ist, über die dritte Kommunikationsschnittstelle (83) empfangene Daten in Ethernet-Datenrahmen zur Übertragung über die erste Single-Pair-Ethernet-basierte Kommunikationsschnittstelle (81) umzuwandeln und über die erste Single-Pair-Ethernet-basierte Kommunikationsschnittstelle (81) empfangene Ethernet-Datenrahmen in Daten zur Übertragung über die dritte Kommunikationsschnittstelle (83) gemäß dem zweiten Kommunikationsprotokoll umzuwandeln, und durch eine Steuer- und/oder Auswerteeinrichtung (84), die dazu ausgebildet ist zu erkennen, ob ein nicht Ethernet-fähiges Feldgerät an der zweiten oder dritten Kommunikationsschnittstelle (82, 83) angeschlossen ist, und die ferner dazu ausgebildet ist, in Abhängigkeit hiervon die erste oder zweite Umwandlungseinrichtung (86, 85) mit der ersten Single-Pair-Ethernet-basierten Kommunikationsschnittstelle (81) zu verbinden.

3. Single-Pair-Ethernet-basierter Geräteadapter (10) nach Anspruch 1,
**gekennzeichnet durch**
eine dritte Kommunikationsschnittstelle (13), die zum Empfangen und Senden von Daten gemäß einem zweiten Kommunikationsprotokoll von und zu einem nicht Ethernet-fähigen Feldgerät (30) ausgebildet ist, wobei das zweite Kommunikationsprotokoll kein Ethernet-Kommunikationsprotokoll ist und das erste und zweite Kommunikationsprotokoll verschieden sind,
eine vierte Single-Pair-Ethernet-basierte Kommunikationsschnittstelle (14), die zum Empfangen und Senden von Ethernet-Datenrahmen über eine zweiadrige Ethernet-Leitung ausgebildet ist, und
eine zweite Umwandlungseinrichtung (16), die dazu ausgebildet ist, über die dritte Kommunikationsschnittstelle (13) empfangene Daten in Ethernet-Datenrahmen zur Übertragung über die vierte Single-Pair-Ethernet-basierte Kommunikationsschnittstelle (14) umzuwandeln und über die vierte Single-Pair-Ethernet-basierte Kommunikationsschnittstelle (14) empfangene Ethernet-Datenrahmen in Daten zur Übertragung über die dritte Kommunikationsschnittstelle (13) gemäß dem zweiten Kommunikationsprotokoll umzuwandeln.

4. Single-Pair-Ethernet-basierter Geräteadapter (10, 80) nach Anspruch 1,
**dadurch gekennzeichnet, dass**
die zweite Kommunikationsschnittstelle (12; 82) eine IO-Link-, HART-, CAN-, Profibus-, RS-232- oder eine RS-485-Schnittstelle ist.

5. Single-Pair-Ethernet-basierter Geräteadapter (10; 80) nach Anspruch 2 oder 3,
**dadurch gekennzeichnet, dass**
die zweite Kommunikationsschnittstelle (12, 82) eine IO-Link-, HART-, CAN-, Profibus-, RS-232- oder eine RS-485-Schnittstelle ist,
die dritte Kommunikationsschnittstelle (13; 83) eine IO-Link-, HART-, CAN-, Profibus-, RS-232- oder eine RS-485-Schnittstelle ist, wobei die zweite und dritte Kommunikationsschnittstelle verschieden sind.

6. Single-Pair-Ethernet-basierter Geräteadapter (10, 80) nach Anspruch 3,
**dadurch gekennzeichnet, dass**
die Energieversorgung des Single-Pair-Ethernet-basieren Geräteadapters unter Verwendung der Power Over Data Line-Technologie über eine an die vierte Single-Pair-Ethernet-basierte Kommunikationsschnittstelle (14) anschließbare zweiadrige Ethernet-Leitung erfolgt.

7. Ethernet-basiertes Prozesssteuerungssystem (1), mit folgenden Merkmalen:
- einem Single-Pair-Ethernet-basierten Geräteadapter (10, 80) nach einem der Ansprüche 1 bis 6, an welchem ein eine Kommunikationsschnittstelle (21, 31) aufweisendes nicht Ethernet-fähiges Feldgeräts (20, 30) direkt angeschlossen ist, wobei die Kommunikationsschnittstelle (21, 31) des nicht Ethernet-fähigen Feldgeräts (20, 30) und die zweite Kommunikationsschnittstelle (12, 82) des Single-Pair-Ethernet-basierten Geräteadapters (10, 80) das erste, nicht Ethernet-basierte Kommunikationsprotokoll unterstützen,
- einem Netzkopplungselement (50), das aufweist:
einen Port (52), der zum Anschließen einer vier- oder achtadrigen Ethernet-Leitung (60) ausgebildet ist, wenigstens einen Single-Pair-Ethernet-basierten Port (51.1-51.n), der zum Anschließen einer zweiadrigen Ethernet-Leitung (40) ausgebildet ist, und
eine Umwandlungseinrichtung (55), die dazu ausgebildet ist, Daten, die an dem wenigstens einen Single-Pair-Ethernet-basierten Port (51.1-51.n) angekommen, in Daten zur Übertragung über den Port (52) umzuwandeln,
und Daten, die an dem Port (52) ankommen, in Daten zur Übertragung über den wenigstens einen Single-Pair-Ethernet-basierten Port (51.1-51.n) umzuwandeln, und
- einer übergeordneten Steuerungseinrichtung (70), die über eine vier- oder achtadrigen Ethernet-Leitung (60) an das Netzkopplungselement (50) anschließbar ist, wobei das Netzkopplungselement (50) über eine zweiadrige Ethernet-Leitung (40) mit dem Single-Pair-Ethernet-basierten Geräteadapter (10, 80) verbindbar ist.

8. Ethernet-basiertes Prozesssteuerungssystem nach Anspruch 7,
wobei das Netzkopplungselement (50) ein Layer-2-Ethernet-Switch ist.

## Claims

1. A single-pair Ethernet-based device adapter (10; 80) for connecting a non-Ethernet-capable field device (20, 30) to an Ethernet-based process control system (1), comprising:
a first single-pair Ethernet-based communication interface (11; 81), which is designed for connecting a two-wire Ethernet cable (40) designed as a single-pair Ethernet cable and for receiving and transmitting Ethernet data frames via the two-wire Ethernet cable (40),
a second communication interface (12; 82) adapted to receive and transmit data according to a first communication protocol from and to a non-Ethernet-capable field device (20), wherein the first communication protocol is not an Ethernet-based communication protocol,
a first conversion device (15; 86) adapted to convert data received via the second communication interface (12; 82) into Ethernet data frames for transmission via the first single-pair Ethernet-based communication interface (11; 81) and to convert Ethernet data frames received via the first single-pair Ethernet-based communication interface (11, 81) into data for transmission via the second communication interface (12; 82) in accordance with the first communication protocol,
wherein the single-pair Ethernet-based device adapter (10; 80) is powered using Power Over Data Line technology via a two-wire Ethernet cable connectable to the first single-pair Ethernet-based communication interface (11; 81).

2. The single-pair Ethernet-based device adapter (80) according to claim 1,
**characterized by**
a third communication interface (83) adapted to receive and transmit data according to a second communication protocol from and to a non-Ethernet-capable field device (20, 30), wherein the second communication protocol is not an Ethernet communication protocol and the first and second communication protocols are different,
a second conversion device (85) which is adapted to convert data received via the third communication interface (83) into Ethernet data frames for transmission via the first single-pair Ethernet-based communication interface (81) and to convert Ethernet data frames received via the first single-pair Ethernet-based communication interface (81) into data for transmission via the third communication interface (83) in accordance with the second communication protocol, and by
a control and/or evaluation device (84) which is designed to recognize whether a non-Ethernet-capable field device is connected to the second or third communication interface (82, 83), and which is also designed to connect the first or second conversion device (86, 85) to the first single-pair Ethernet-based communication interface (81) as a function of this.

3. The single-pair Ethernet-based device adapter (10) according to claim 1,
**characterized by**
a third communication interface (13) adapted to receive and transmit data according to a second communication protocol from and to a non-Ethernet-capable field device (30), wherein the second communication protocol is not an Ethernet communication protocol and the first and second communication protocols are different,
a fourth single-pair Ethernet-based communication interface (14) adapted to receive and transmit Ethernet data frames over a two-wire Ethernet line, and
a second conversion device (16), which is designed to convert data received via the third communication interface (13) into Ethernet data frames for transmission via the fourth single-pair Ethernet-based communication interface (14) and to convert Ethernet data frames received via the fourth single-pair Ethernet-based communication interface (14) into data for transmission via the third communication interface (13) in accordance with the second communication protocol.

4. The single-pair Ethernet-based device adapter (10, 80) according to claim 1,
**characterized in that**
the second communication interface (12; 82) is an IO-Link-, HART-, CAN-, Profibus-, RS-232- or RS-485-interface.

5. The single-pair Ethernet-based device adapter (10; 80) according to claim 2 or 3,
**characterized in that**
the second communication interface (12, 82) is an IO-Link-, HART-, CAN-, Profibus-, RS-232- or RS-485-interface,
the third communication interface (13; 83) is an IO-Link-, HART-, CAN-, Profibus-, RS-232- or RS-485-interface, wherein the second and third communication interfaces are different.

6. The single-pair Ethernet-based device adapter (10, 80) according to claim 3,
**characterized in that**
the single-pair Ethernet-based device adapter is supplied with power using Power Over Data Line technology via a two-wire Ethernet cable which can be connected to the fourth single-pair Ethernet-based communication interface (14).

7. An Ethernet-based process control system (1), comprising the following features:
- a single-pair Ethernet-based device adapter (10, 80) according to any one of claims 1 to 6, to which a non-Ethernet-capable field device (20, 30) having a communication interface (21, 31) is directly connected, wherein the communication interface (21, 31) of the non-Ethernet-capable field device (20, 30) and the second communication interface (12, 82) of the single-pair Ethernet-based device adapter (10, 80) support the first, non-Ethernet-based communication protocol,
- a network coupling element (50) comprising a port (52) configured to connect a four-wire or eight-wire Ethernet cable (60),
at least one single-pair Ethernet-based port (51.1-51.n) designed to connect a two-wire Ethernet cable (40), and
a conversion device (55) which is designed to convert data arriving at the at least one single-pair Ethernet-based port (51.1-51.n) into data for transmission via the port (52), and to convert data arriving at the port (52) into data for transmission via the at least one single-pair Ethernet-based port (51.1-51.n), and
- a higher-level control device (70) which can be connected to the network coupling element (50) via a four-wire or eight-wire Ethernet cable (60),
wherein the network coupling element (50) can be connected to the single-pair Ethernet-based device adapter (10, 80) via a two-wire Ethernet cable (40).

8. The Ethernet-based process control system according to claim 7,
wherein the network coupling element (50) is a layer 2 Ethernet switch.

## Revendications

1. Adaptateur d'appareil (10 ; 80) basé sur Ethernet à paire unique pour connecter un appareil de terrain (20, 30) non compatible Ethernet à un système de commande de processus (1) basé sur Ethernet, comprenant :
une première interface de communication (11 ; 81) basée sur Ethernet à paire unique,
laquelle est conçue pour connecter une ligne Ethernet (40) à deux fils conçue sous la forme d'une ligne Ethernet à paire unique et pour recevoir et envoyer des trames des données Ethernet par l'intermédiaire de la ligne Ethernet (40) à deux fils, une deuxième interface de communication (12 ; 82), laquelle est conçue pour recevoir et envoyer des données conformément à un premier protocole de communication depuis et à un appareil de terrain (20) non compatible Ethernet, le premier protocole de communication n'étant pas un protocole de communication basé sur Ethernet,
un premier dispositif de conversion (15 ; 86), lequel est conçu pour convertir les données reçues par l'intermédiaire de la deuxième interface de communication (12 ; 82) en trames de données Ethernet destinées à être transmises par l'intermédiaire de la première interface de communication (11 ; 81) basée sur Ethernet à paire unique et pour convertir les trames de données Ethernet reçues par l'intermédiaire de la première interface de communication (11, 81) basée sur Ethernet à paire unique en données destinées à être transmises par l'intermédiaire de la deuxième interface de communication (12 ; 82) conformément au premier protocole de communication,
dans lequel l'alimentation électrique de l'adaptateur d'appareil (10 ; 80) basé sur Ethernet à paire unique s'effectue à l'aide de la technologie de puissance sur des lignes de données (Power Over Data Line) par l'intermédiaire de la ligne Ethernet à deux fils pouvant être connectée à la première interface de communication (11 ; 81) basée sur Ethernet à paire unique.

2. Adaptateur d'appareil (80) basé sur Ethernet à paire unique selon la revendication 1, **caractérisé par**
une troisième interface de communication (83), laquelle est conçue pour recevoir et envoyer des données conformément à un second protocole de communication depuis et à un dispositif de terrain (20, 30) non compatible Ethernet,
dans lequel le second protocole de communication n'est pas un protocole de communication Ethernet et les premier et second protocoles de communication sont différents,
un second dispositif de conversion (85), lequel est conçu pour convertir les données reçues par l'intermédiaire de la troisième interface de communication (83) en trames de données Ethernet destinées à être transmises par l'intermédiaire de la première interface de communication (81) basée sur Ethernet à paire unique et pour convertir les trames de données Ethernet reçues par l'intermédiaire de la première interface de communication (81) basée sur Ethernet à paire unique en données destinées à être transmises par l'intermédiaire de la troisième interface de communication (83) conformément au second protocole de communication, et par
un dispositif de commande et/ou d'évaluation (84), lequel est conçu pour détecter si un appareil de terrain non compatible Ethernet est connecté à la deuxième ou à la troisième interface de communication (82, 83), et lequel est en outre conçu pour connecter, par conséquent, le premier ou le second dispositif de conversion (86, 85) à la première interface de communication (81) basée sur Ethernet à paire unique.

3. Adaptateur d'appareil (10) basé sur Ethernet à paire unique selon la revendication 1, **caractérisé par**
une troisième interface de communication (13), laquelle est conçue pour recevoir et envoyer des données conformément au second protocole de communication depuis et au dispositif de terrain (30) non compatible Ethernet, dans lequel le second protocole de communication n'est pas un protocole de communication Ethernet et les premier et second protocoles de communication sont différents,
une quatrième interface de communication (14) basée sur Ethernet à paire unique, laquelle est conçue pour recevoir et envoyer des trames de données Ethernet par l'intermédiaire de la ligne Ethernet à deux fils, et le second dispositif de conversion (16), lequel est conçu pour convertir les données reçues par l'intermédiaire de la troisième interface de communication (13) en trames de données Ethernet destinées à être transmises par l'intermédiaire de la quatrième interface de communication (14) basée sur Ethernet à paire unique et pour convertir les trames de données Ethernet reçues par l'intermédiaire de la quatrième interface de communication (14) basée sur Ethernet à paire unique en données destinées à être transmises par l'intermédiaire de la troisième interface de communication (13) conformément au second protocole de communication.

4. Adaptateur d'appareil (10, 80) basé sur Ethernet à paire unique selon la revendication 1, **caractérisé en ce que**
la deuxième interface de communication (12 ; 82) est une interface IO-Link, HART, CAN, Profibus, RS-232 ou RS-485.

5. Adaptateur d'appareil (10, 80) basé sur Ethernet à paire unique selon la revendication 2 ou 3,
**caractérisé en ce que**
la deuxième interface de communication (12 ; 82) est une interface IO-Link, HART, CAN, Profibus, RS-232 ou RS-485,
la troisième interface de communication (13 ; 83) est une interface IO-Link, HART, CAN, Profibus, RS-232 ou RS-485, dans lequel les deuxième et troisième interfaces de communication sont différentes.

6. Adaptateur d'appareil (10, 80) basé sur Ethernet à paire unique selon la revendication 3, **caractérisé en ce que**
l'alimentation électrique de l'adaptateur d'appareil basé sur Ethernet à paire unique s'effectue à l'aide de la technologie de puissance sur des lignes de données (Power Over Data Line) par l'intermédiaire de la ligne Ethernet à deux fils pouvant être connectée à la quatrième interface de communication (14) basée sur Ethernet à paire unique.

7. Système de commande de processus (1) basé sur Ethernet, comportant les caractéristiques suivantes :
- un adaptateur d'appareil (10, 80) basé sur Ethernet à paire unique selon l'une quelconque des revendications 1 à 6, auquel est directement connecté un appareil de terrain (20, 30) non compatible Ethernet comprenant une interface de communication (21, 31), dans lequel l'interface de communication (21, 31) de l'appareil de terrain (20, 30) non compatible Ethernet et la deuxième interface de communication (12, 82) de l'adaptateur d'appareil (10, 80) basé sur Ethernet à paire unique prennent en charge le premier protocole de communication non basé sur Ethernet,
- un élément de couplage réseau (50), lequel comprend :
un port (52), lequel est conçu pour connecter une ligne Ethernet (60) à quatre ou huit fils, au moins un port (51.1-51.n) basé sur Ethernet à paire unique, lequel est conçu pour connecter la ligne Ethernet (40) à deux fils, et
un dispositif de conversion (55), lequel est conçu pour convertir les données, lesquelles arrivent à l'au moins un port (51.1-51.n) basé sur Ethernet à paire unique en données destinées à être transmises par l'intermédiaire du port (52), et pour convertir les données, lesquelles arrivent au port (52) en données destinées à être transmises par l'intermédiaire de l'au moins un port (51.1-51.n) basé sur Ethernet à paire unique, et
- un dispositif de commande (70) supérieur, lequel peut être connecté à l'élément de couplage réseau (50) par l'intermédiaire de la ligne Ethernet (60) à quatre ou huit fils, dans lequel l'élément de couplage réseau (50) peut être connecté à l'adaptateur d'appareil (10, 80) basé sur Ethernet à paire unique par l'intermédiaire de la ligne Ethernet (40) à deux fils.

8. Système de commande de processus basé sur Ethernet selon la revendication 7, dans lequel l'élément de couplage réseau (50) est un commutateur Ethernet de couche 2.
